# EUROPEAN PATENT APPLICATION

(11) **EP 1 791 084 A1**
(43) Date of publication of application: **30.05.2007**
(21) Application number: 05783184.4
(22) Date of filing: 13.09.2005
(51) Int. Cl.: G06K 19/077, B24D 15/10, G06K 19/07

(54) **TAPE WITH BUILT-IN IC CHIP, METHOD FOR MANUFACTURING THE TAPE, AND SHEET WITH BUILT-IN IC CHIP**

(30) Priority: 14.09.2004 JP 2004267162; 18.01.2005 JP 2005010052
(71) Applicant: Oji Paper Company Limited, Tokyo 104-0061 (JP); Fec Co., Ltd., Ishikawa-ken (JP); Oji Specialty Paper Co., Ltd., Tokyo 1040061 (JP); Toppan Forms Co., Ltd., Tokyo 105-8311 (JP)
(72) Inventor: AYAKI, Mitsuhiro, Oji Paper Co., Ltd., Tokyo 1040061 (JP); KANDA, Nobuo, Oji Paper Co., Ltd., Tokyo 1040061 (JP); SUGIMURA, Shiro, FEC CO., LTD., Kanazawa-shi, Ishikawa 9200377 (JP); KOBAYASHI, Hideki, FEC CO., LTD., Kanazawa-shi, Ishikawa 9200377 (JP); OZAKI, Tuyoshi, Oji Specialty Paper Co., Ltd., Tokyo 1040061 (JP); TOMITA, Keitaro, Oji Specialty Paper Co., Ltd., Tokyo 1040061 (JP); UTAKA, Keiichi, TOPPAN FORMS CO., LTD., Tokyo 1058311 (JP); SAITO, Mitugi, 0100041 (JP)
(74) Representative: Poulin, Gérard
(86) International application number: PCT/JP2005/016842
(87) International publication number: WO 2006/030785

(57) **Abstract**

The present invention relates to a sheet with at least one built-in IC chip, the sheet being scarcely influenced by a mechanical external force and being free from loss or damage of the IC chip, and relates to a tape with at least one built-in IC chip used for the sheet with at least one built-in IC chip. The tape with at least one built-in IC chip is **characterized in that** a part or all of the IC chip 10 is embedded in a recessed portion 20a formed on a tape body, and the tape body 20 includes: a first base material 21; an adhesive layer 22 laminated on the first base material and formed of an adhesive; and a second base material 23 laminated on the adhesive layer; the second base material 23 being removed from the recessed portion 20a and the periphery thereof, and the adhesive in the recessed portion 20a of the adhesive layer 22 being pushed to the periphery thereof, and the pushed adhesive filling in a gap between the periphery of the IC chip 10 and the second base material 23.

## Description

### TECHNICAL FIELD

The present invention relates to a tape with at least one built-in IC chip, a production method thereof, and a sheet with at least one built-in IC chip using the tape with at least one built-in IC chip.

The present invention claims priority on Japanese Patent Application No. 2004-267162 filed on September 14, 2004, and Japanese Patent Application No. 2005-10052 filed on January 18, 2005, the contents of which are incorporated herein by reference.

### BACKGROUND ART

Recently, counterfeiting of paper money, etc., has become a serious social problem in association with the progress in copy machine technology. Accordingly, in order to prevent alteration or counterfeiting of paper currency, merchandise coupons, bank checks, stock certificates, passports, IDs, credit cards, etc., various countermeasures for preventing counterfeiting have been taken.

As one such countermeasure, paper for preventing counterfeiting, so-called "thread-containing paper", in which a filament-like material (tape) called a "thread" is included between paper layers has been developed (Patent Documents 1 to 4). Since the thread-containing paper requires high-level technology for including a thread in the paper, it is appropriate as a counterfeit-preventing means and has been used for paper currency, merchandise coupons, etc., in many countries.

Also, in order to further improve the counterfeit-preventing effects of the thread-containing paper, a technique for forming watermarks and for printing micro-characters or micro-images on a thread surface using a metal vapor deposition method has been proposed (Patent Document 5).

Recently, a method has also been proposed in which an IC chip is adhered on one surface of a thread of a thin film and the thread is inserted into a sheet-like material, such as paper or plastic (Patent Document 6).
(Patent Document 1) Japanese Unexamined Patent Application, First Publication No. S48-75808
(Patent Document 2) Japanese Unexamined Patent Application, First Publication No. S50-88377
(Patent Document 3) Japanese Unexamined Patent Application, First Publication No. S51-130308
(Patent Document 4) Japanese Unexamined Patent Application, First Publication No. H10-292297
(Patent Document 5) Japanese Unexamined Patent Application, First Publication No. H10-219597
(Patent Document 6) Japanese Laid-Open Patent Application No. 2002-319006

### DISCLOSURE OF THE INVENTION

### Problems to be Solved by the Invention

The counterfeit-preventing paper provided with a thread to which an IC chip is adhered exhibits a better counterfeit-preventing effect as compared with that provided with only a thread free from any IC chips, as described in Patent Document 6. However, the thread with an IC chip may cause the following problems due to its structure.

(1) The IC chip is easily separated from the surface by an applied external force since the portion to which the IC chip is adhered protrudes from the surface of the thread. In particular, it is likely that an IC chip may become separated and detached from a thread when a mechanical external force or heat is applied thereto during machine processes (a wiring, pressing, drying, and calendering process, etc.). Since it is not easy to detect such detachment caused during a machine process, a process of printing numbers (that are provided to counterfeit-preventing paper) must be carried out again if detachment of the IC chip is confirmed after paper is produced and printed as the counterfeit-preventing paper. Also, there is a possibility that IC chips may be detached during circulation or use.

(2) Since the portion to which the IC chip is adhered protrudes from the thread, the IC chip itself, and the circuit and function thereof may be damaged by an external force applied by, for example, a calender.

It may be considered to form a groove at a portion where the thread is inserted so as to decrease the external force applied to the IC chip. However, in this case also, a protruding portion is generated since the thickness of the portion to which the IC chip is adhered becomes thicker than that of a film. Therefore, there is a limit to avoid the concentration of an external force on the IC chip.

(3) Since the thickness of the tape and the IC chip portion is about 25 to 100 µm, the thickness of a portion at which the tape is inserted increases and the following are caused.
(i) The sheet is torn along the tape or the sides of the chip.
(ii) Wrinkles are generated.
(iii) The gloss is reduced.

(4) There are some printing methods that are not suitably applied because of an uneven thickness of a surface caused at the insertion position.

The present invention has as its object the provision of a sheet with at least one built-in IC chip in which a mechanical external force tends not to be applied to the IC chip and the IC chip is not separated or damaged, and to provide a tape with at least one built-in IC chip used for the sheet with at least one built-in IC chip, and to provide a production method thereof.

### Means for Solving the Problems

In order to achieve the above-mentioned object, the present invention includes the following aspects:
[1] a tape with at least one built-in IC chip used for a sheet with at least one built-in IC chip, characterized by including: at least one IC chip; and a tape body having at least one recessed portion, wherein a part or all of the IC chip is embedded in the recessed portion, and the tape body includes a first base material, an adhesive layer laminated on the first base material and formed of an adhesive, and a second base material laminated on the adhesive layer, the second base material being removed from the recessed portion and the periphery thereof, the adhesive of the adhesive layer being pushed to the periphery of the recessed portion, and the pushed adhesive filling in a gap between the periphery of the IC chip and the second base material;
[2] a tape with at least one built-in IC chip according to [1], wherein all of the IC chip is embedded in the tape body;
[3] a tape with at least one built-in IC chip according to [1] or [2], wherein the adhesive is a hot-melt resin;
[4] a method for producing a tape with at least one built-in IC chip used for a sheet with at least one built-in IC chip, characterized by including: a step of forming a tape body by laminating a first base material and a second base material via an adhesive layer formed of an adhesive; a step of forming at least one IC chip-insertion opening by removing a part of the second base material; and a step of inserting at least one IC chip into the adhesive layer through the insertion opening;
[5] a method for producing a tape with at least one built-in IC chip according to [4], wherein the adhesive is a hot-melt resin and the step of inserting is carried out under heated conditions;
[6] a method for producing a tape with at least one built-in IC chip according to [4] or [5], wherein the step of forming the insertion opening is carried out by laser irradiation;
[7] a sheet with at least one built-in IC chip, characterized in that the tape with at least one built-in IC chip of any one of [1] to [3] is inserted inside a sheet-like material;
[8] a sheet with at least one built-in IC chip according to [7], wherein the sheet-like material is a multilayer paper;
[9] a sheet with at least one built-in IC chip according to [8], wherein an entire part or a part of an inserted portion of a layer into which the tape with at least one built-in IC chip is inserted is formed without attaching a sheet raw material;
[10] A sheet with at least one built-in IC chip according to [7], wherein a part of the tape with at least one built-in IC chip is in an exposed state; and
[11] A sheet with at least one built-in IC chip, characterized in that the tape with at least one built-in IC chip according to any one of [1] to [3] is attached to a sheet-like material.

### Effects of the Invention

According to the present invention described in [1] to [3] above, a concentrated mechanical external force is not applied to the IC chip since a part or the entirety of the IC chip is embedded in the tape body. Moreover, the IC chip is strongly adhered to the tape body, since the adhesive is filled in a gap between the periphery of the IC chip and the second base material. Therefore, the sheet with at least one built-in IC chip in which the IC chip is not separated or damaged is obtained according to the present invention.

According to the present invention described in [4] to [6], the tape with at least one built-in IC can be easily obtained.

According to the present invention described in [7] to [11], the sheet with at least one built-in IC chip in which the IC chip is not detached or damaged is obtained. Accordingly, when used for counterfeit-preventing paper, it is not necessary to reprint numbers (which are provided to counterfeit-preventing paper) since the IC chip will not become detached.

In particular, according to the present invention described in [9], it becomes possible:
i) to eliminate the difference in the thickness between a tape-portion and a chip-portion so that paper may be obtained having no tearing of the sheet along the tape or the sides of the chip, no generation of wrinkles and no lowering in gloss;
ii) to prevent the IC chip from being damaged by an applied external force; and
iii) to perform printing by all kinds of printing methods.

### BRIEF DESCRIPTION OF DRAWINGS

FIG. 1 is a plan view showing a schematic constitution of a tape with at least one built-in IC chip according to a first embodiment of the present invention.
FIG. 2 is a cross-sectional view showing a schematic constitution of the tape with at least one built-in IC chip according to the first embodiment of the present invention.
FIG. 3 is a cross-sectional view showing a schematic constitution of a tape with at least one built-in IC chip according to a second embodiment of the present invention.
FIG. 4 is a cross-sectional view showing a schematic constitution of a tape with at least one built-in IC chip according to a third embodiment of the present invention.
FIG. 5 is a cross-sectional view showing a schematic constitution of a tape with at least one built-in IC chip according to a fourth embodiment of the present invention.
FIG. 6 is a process drawing showing a production method of the tape with at least one built-in IC chip according to the present invention.
FIG. 7 is a process drawing showing a production method of the tape with at least one built-in IC chip according to the present invention.
FIG. 8 is a process drawing showing a production method of the tape with at least one built-in IC chip according to the present invention.
FIG. 9 is a plan view showing a schematic constitution of a sheet with at least one built-in IC chip according to a first embodiment of the present invention.
FIG. 10 is a cross-sectional view showing a schematic constitution of the sheet with at least one built-in IC chip according to the first embodiment of the present invention.
FIG. 11 is a plan view showing a schematic constitution of a sheet with at least one built-in IC chip according to a modification of the first embodiment of the present invention.
FIG. 12 is a cross-sectional view showing a schematic constitution of the sheet with at least one built-in IC chip according to the modification of the first embodiment of the present invention.
FIG. 13 is a plan view showing a schematic constitution of a sheet with at least one built-in IC chip according to another modification of the first embodiment of the present invention.
FIG. 14 is a s cross-sectional view showing a schematic constitution of the sheet with at least one built-in IC chip according to the modification in FIG. 13 of the first embodiment of the present invention.
FIG. 15 is a plan view showing a schematic constitution of a sheet with at least one built-in IC chip according to a second embodiment of the present invention.
FIG. 16 is a cross-sectional view showing a schematic constitution of the sheet with at least one built-in IC chip according to the second embodiment of the present invention.
FIG. 17 is a cross-sectional view showing a schematic constitution of a sheet with at least one built-in IC chip according to a third embodiment of the present invention.
FIG. 18 is a cross-sectional view showing a schematic constitution of a sheet with at least one built-in IC chip according to a fourth embodiment of the present invention.

### Brief Description of the Reference Symbols

- 1: Sheet with at least one built-in IC Chip
- 2: Sheet-like Material
- 3: Watermark
- 10: IC Chip
- 20: Tape Body
- 21: First Base Material
- 22: Adhesive Layer
- 23: Second Base Material

### BEST MODE FOR CARRYING OUT THE INVENTION

In the following, the present invention will be explained in more detailed by referring to the drawings. Note that the dimensional ratio of the drawings is different from the actual ratio for the sake of explanation and particularly enlarged in a thickness direction.

### <Tape with at least one built-in IC Chip>

### (First embodiment of the tape with at least one built-in IC chip)

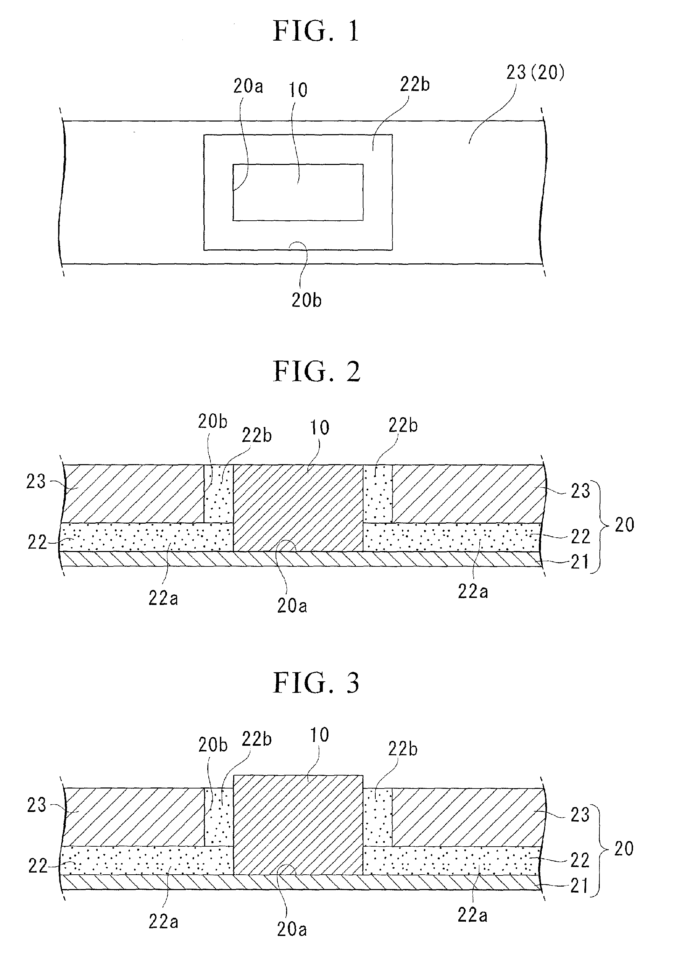

FIGS. 1 and 2 are schematic diagrams showing a first embodiment of a tape with at least one built-in IC chip according to the present invention. FIG. 1 shows a plan view and FIG. 2 shows a cross-sectional view of the tape with at least one built-in IC chip according to the first embodiment.

As shown in FIGS. 1 and 2, the tape with at least one built-in IC chip of this embodiment includes an IC chip 10 and a tape body 20, and the IC chip 10 is embedded in a recessed portion 20a of the tape body 20.

Although the width of the tape body 20 is not particularly limited, it is preferably within the range of 1 to 5 mm. Also, although it is preferable that the length of the tape body 20 be as long as possible, it may be within the range of 500 to 20,000 meters.

The tape body 20 includes a first base material 21, an adhesive layer 22 made of an adhesive and laminated on the first base material 21, and a second base material 23 laminated on the adhesive layer 22. The second base material 23 is removed from an area surrounding the recessed portion 20a, which corresponds to an IC chip-insertion opening 20b.

The adhesive layer 22 includes: a laminated portion 22a formed between the first base material 21 and the second base material 23; and a filled portion 22b formed in a gap between the periphery of the IC chip 10 and the second base material 23 in the IC chip-insertion opening 20b. The filled portion 22b is formed by the adhesive being pushed out from the recessed portion 20a when the IC chip 10 is inserted into the recessed portion 20 as described below. Although not shown in the drawings, a small quantity of the adhesive remains at the bottom of the recessed portion 20a (corresponding to the upper surface side of the first base material 21).

The IC chip 10 includes an IC (integrated circuit) and an antenna incorporated therein. When electric energy is supplied to the IC chip 10, information stored in a memory thereof may be read and/or new information may be written by means of a non-contact recognition system.

Although it is preferable that the size of the IC chip 10 be as small as possible, it may be usable with a side of 5 mm or less, and preferably 2 mm or less. The thickness of the IC chip 10 is advantageously thinner than the thickness of a final product of the sheet with at least one built-in IC chip. Accordingly, a fine, thin IC chip having a side of 0.5 mm and thickness of 70 µm, for example, may be suitably utilized.

Also, methods for producing the IC chip 10 are not particularly limited, and those described in Patent Document 6, for example, may be suitably employed.

The antenna of the IC chip 10 is preferably an antenna which forms a resonance circuit with a coil element and a capacitor and obtains microwave energy and signals on-chip.

In such a case, since the time constant becomes small by utilizing microwaves, it becomes possible to realize a resonance circuit using a microcircuit by adjusting, for example, the inductance of the coil and the electrostatic capacity of the capacitor to 2 nanohenries and 2 picofarads, respectively. In this manner, it becomes possible to dispose an antenna on a fine IC chip having a side of 0.5 mm or less.

The coil element and the capacitor clement which form the antenna are connected in parallel or in series, and are connected to a high frequency receiving circuit.

Materials for forming the first base material 21 and the second base material 23 are not particularly limited, and it is possible to use paper, a plastic film, and so forth. It is preferable to make one of the first and second base materials 21 and 23 using paper and the other using a plastic film since the resulting material will not be stretched when being incorporated into paper as a tape with at least one built-in IC chip.

According to the present invention, various materials may be used depending on insulation property, mechanical strength, application, etc., as a base material of a plastic film. Examples thereof include a polyester resin, such as polyethylene terephthalate, polybutylene terephthalate, polyethylene naphthalate, polyethylene terephthalate / isophthalate copolymer, terephthalic acid / cyclohexanedimethanol / ethyleneglycol copolymer, cyclohexanedimethanol / ethyleneglycol copolymer, and a polyethylene terephthalate /polyethylene naphthalate co-extrusion film; a polyamide resin, such as nylon 6, nylon 66, and nylon 610; a polyolefin resin, such as polyethylene, polypropylene, and polymethylpentene; a vinyl resin, such as polyvinyl chloride; an acryl resin, such as polyacrylate, polymethacrylate, and polymethylmethacrylate; an imide resin, such as polyimide, polyamideimide, and polyether imide, an engineering resin, such as polyallylate, polysulfone, polyethersulfone, polyphenylene ether, polyphenylene sulfide (PPS), polyaramid, polyether ketone, polyether nitrile, polyetheretherketone, and polyethersulfite; a styrene resin, such as polycarbonate, polystyrene, high impact polystyrene, AS resin, and ABS resin; and a cellulose film, such as cellophane, cellulose triacetate, cellulose diacetate, and nitrocellulose.

Paper that can be used in the present invention is not particularly limited; however, that which contains metals, etc., which interfere with communication with the IC chip 10 is not appropriate. It is possible to use synthetic paper if necessary.

As materials of the adhesive layer 22, from the viewpoints of the adhesive strength and the ease of handling, an ethylene resin, a propylene resin, a styrene resin, a vinyl chloride resin, a vinylidene chloride resin, an ethylene / vinyl acetate copolymer resin, a butyral resin, a polyester resin, a polyamide resin, an acryl resin, a nitrile resin, a butadiene resin, a halogenated rubber, a urethane resin, a cellulose resin, gelatin, a phenol resin, a urea-formaldehyde resin, a melamine-formaldehyde resin, an epoxy resin, an unsaturated polyester resin, a silicone resin, an alkyd resin, an allyl resin, a furan resin, a copolymer of monomers which form the above-mentioned resins and so forth may be suitably used.

Among them, a polyester resin, low-density polyethylene, atactic polypropylene, ethylene-vinyl acetate copolymer, ethylene-acrylic acid copolymer, ethylene-ethylacrylate copolymer, ethylene-isobutylacrylate copolymer, vinyl acetate-crotonic acid copolymer, vinyl acetate-phthalic anhydride copolymer, styrene-isoprene-styrene block copolymer, styrene-butadiene-styrene block copolymer, styrene-ethylene-butylene-styrene block copolymer, nylon-12, terephthalic acid-1,3-butadiol copolymer may be suitably used according to the present invention. The heat melting resin including the thermoplastic polymer may be used singularly or in a mixture of two or more. Also, it is possible to include a curing agent therein.

Particularly, a hot-melt resin is preferably used, because, by heating, the recessed portion 20a can be provided and the IC chip 10 can be fixed.

In the tape with at least one built-in IC chip according to this embodiment, a mechanical external force is hardly applied to the IC chip 10 since the entirety of the IC chip 10 is embedded in the tape body 20. Moreover, the IC chip 10 is strongly adhered to the tape body 20 since the adhesive is filled between the periphery of the IC chip 10 and the second base material 23. Therefore, the sheet with at least one built-in IC chip in which the IC chip is not separated or damaged can be obtained according to the present invention.

Also, the total thickness of the adhesive layer 22 and the second base material 23 is equal to that of the IC chip 10 in this embodiment. In this manner, it becomes possible to embed the entire IC chip 10 into the recessed portion 20a of the tape body 20 without unnecessarily increasing the thickness of the tape body 20.

### (Second embodiment of the tape with at least one built-in IC chip)

FIG. 3 is a cross-sectional view showing a schematic constitution of the tape with at least one built-in IC chip according to the present invention. Because a plan view of this embodiment is the same as that of the first embodiment shown in FIG. 1, it will be omitted. Also, structural components that are the same as those shown in FIG. 2 are indicated using the same reference numerals as in FIG. 3, and the detailed explanation thereof will be omitted.

In this embodiment, most of the IC chip 10 is embedded into the recessed portion 20a of the tape body 20. Therefore, a mechanical external force applied to the IC chip 10 is low in comparison with the case where an IC chip is adhered to the surface of the tape body 20. Moreover, because the adhesive is filled between the periphery of the IC chip 10 and the second base material 23, the IC chip 10 is strongly adhered to the tape body 20. Accordingly, the sheet with at least one built-in IC chip in which the IC chip 10 is not separated or damaged can be obtained according to the present invention.

### (Third embodiment of the tape with at least one built-in IC chip)

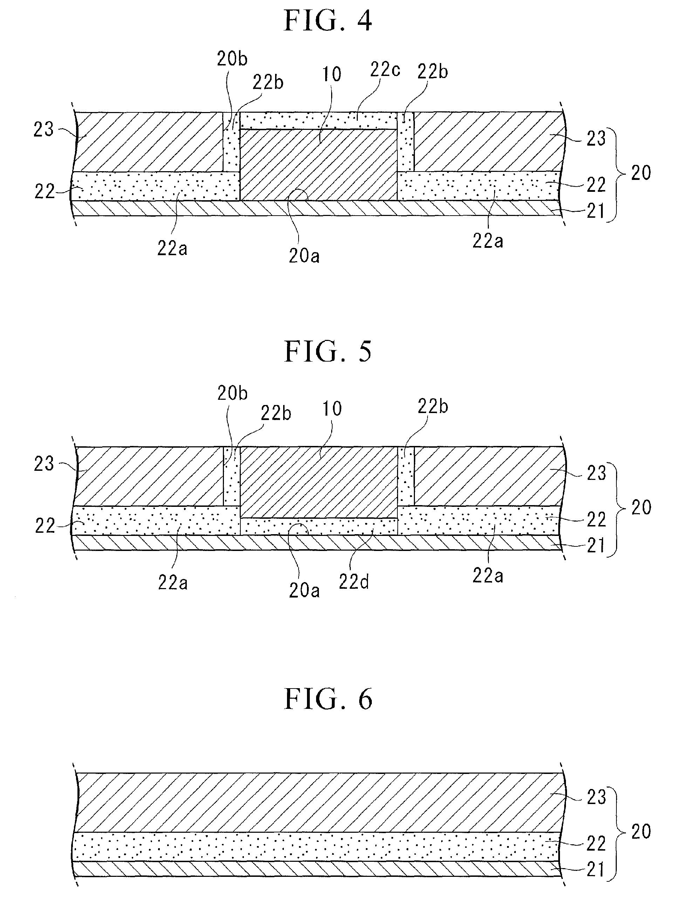

FIG. 4 is a cross-sectional view showing a schematic constitution of a third embodiment of the tape with at least one built-in IC chip according to the present invention. Because a plan view of this embodiment is approximately the same as that of the first embodiment shown in FIG. 1, it will be omitted. Also, structural components that are the same as those shown in FIG. 2 are indicated using the same reference numerals as in FIG. 4, and the detailed explanation thereof will be omitted.

In this embodiment, a cover portion 22c is formed by the adhesive on the upper surface of the IC chip 10 embedded in the recessed portion 20a of the tape body 20. The cover portion 22c is formed by surplus adhesive pushed out from the recessed portion 20a via the filled portion 22b when the IC chip 10 is inserted into the recessed portion 20a as described later.

The IC chip 10 of this embodiment is further less influenced by a mechanical external force due to the cover portion 22c than that of the first embodiment. Moreover, the IC chip is more strongly adhered to the tape body 20 in comparison with that of the first embodiment. Accordingly, a sheet with at least one built-in IC chip in which the IC chip 10 is not separated or damaged can be obtained according to this embodiment.

### (Fourth embodiment of the tape with at least one built-in IC chip)

FIG. 5 is a cross-sectional view showing a schematic constitution of a fourth embodiment of the tape with at least one built-in IC chip according to the present invention. Because a plan view of this embodiment is the same as that of the first embodiment shown in FIG. 1, it will be omitted. Also, structural components that are the same as those shown in FIG. 2 are indicated using the same reference numerals as in FIG. 5, and the detailed explanation thereof will be omitted.

In this embodiment, a base portion 22d is formed by the adhesive beneath the bottom surface of the IC chip 10 embedded in the recessed portion 20a, that is, at the bottom of the recessed portion 20a, of the tape body 20.

Also, in the first embodiment to the third embodiment described above, although a small amount of the adhesive exists in a position corresponding to the base portion 22d, the thickness of the adhesive is to a negligible degree. In contrast, the thickness of the base portion 22d is to a nonnegligible degree.

The IC chip 10 of this embodiment is hardly influenced by a mechanical external force, because the entire IC chip 10 is embedded into the tape body 20. Moreover, the IC chip 10 is more strongly adhered to the tape body 20 than that of the first embodiment, because the IC chip 10 is adhered to the first base material 21 via the base portion 22d. Accordingly, a sheet with at least one built-in IC chip in which the IC chip 10 is not separated or damaged can be obtained according to this embodiment.

### (Other embodiments of the tape with at least one built-in IC chip)

Although the bottom of the recessed portion 20a docs not reach the first base material 21 in each of the embodiments described above, the recessed portion 20a may be extended inside of the first base material 21. However, it is not preferable that the first base material 21 be penetrated.

Moreover, although only one IC chip 10 is used in each of the embodiments described above, plural IC chips 10 may be embedded in the recessed portion 20a of the tape body 20.

### <Method for producing the tape with at least one built-in IC chip>

A method for producing the tape with at least one built-in IC chip will be explained by taking the tape with at least one built-in IC chip according to the first embodiment as an example.

First, as shown in FIG. 6, the tape body 20 in which the first base material 21, the adhesive layer 22, and the second base material 23 are sequentially laminated is prepared (the step of forming the tape body).

In the step of forming the tape body, it is preferable that a wide sheet for the first base material 21 and a sheet for the second base material 23 be adhered together by using the adhesive for forming the adhesive layer 22, and then the assembly be cut to a predetermined width to obtain the tape body 20.

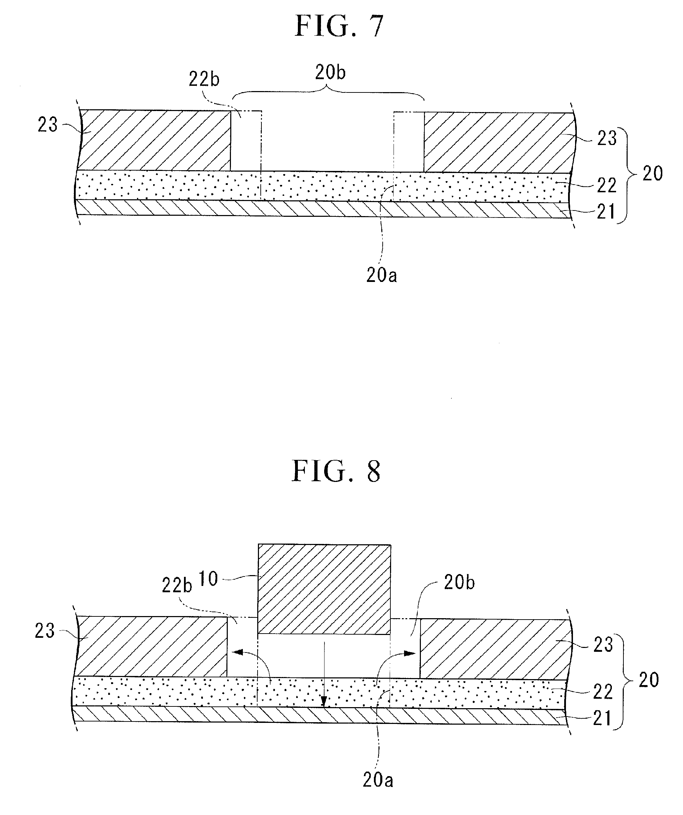

Next, as shown in FIG. 7, the IC chip-insertion opening 20b is formed by removing the second base material 23 from a region surrounding a portion at which the recessed portion 20a is to be formed (the step of forming the insertion opening).

In the step of forming the insertion opening, a laser molding method by which the second base material 23 is removed by laser irradiation is preferably used. This can accurately form a fine opening at a predetermined position. Also, by controlling the strength of laser beams, it is possible to maintain the first base material 21 without being damaged.

In addition to the laser molding method, an injection molding method, a precision boring method, a pressing method using a protruding body, a vacuum molding method, a compression molding method, a vacuum-compression molding method, a plug-assisted molding method, or a plastic deformation method using a male-female mold can be preferably used.

Next, as shown in FIG. 8, the IC chip 10 is inserted into the adhesive layer 22 through the IC chip-insertion opening 20b (the step of insertion). This produces the tape with at least one built-in IC chip shown in FIGS. 1 and 2. At this point, the adhesive existing at the inserted portion into which the IC chip 10 is inserted is pushed out of the periphery of the IC chip 10 to form the filled portion 22b as shown in FIG. 2.

In the step of insertion, it is required that the adhesive of the adhesive layer 22 exhibit fluidity or plasticity in the portion in which the recessed portion 20a is to be formed. In contrast, it is preferable that the adhesive of the adhesive layer 22 does not exhibit fluidity or plasticity outside the portion in which the recessed portion 20a is to be formed.

Accordingly, it is preferable that an adhesive made of a thermoplastic resin or an adhesive containing at least one thermoplastic resin be used as the adhesive and a portion in which the recessed portion 20a is to be formed be intensively heated so as to realize fluidity or plasticity only at this portion. In particular, hot-melt resins are preferably used, because they easily realize fluidity by heating.

When the laser molding method is used in the above-mentioned step of insertion, it is possible to heat the adhesive layer 22 by laser energy. In this case, a heating apparatus is not required in the step of insertion, as a result of which preparation is simplified.

### <Sheet with at least one built-in IC Chip>

### (First embodiment of the sheet with at least one built-in IC chip)

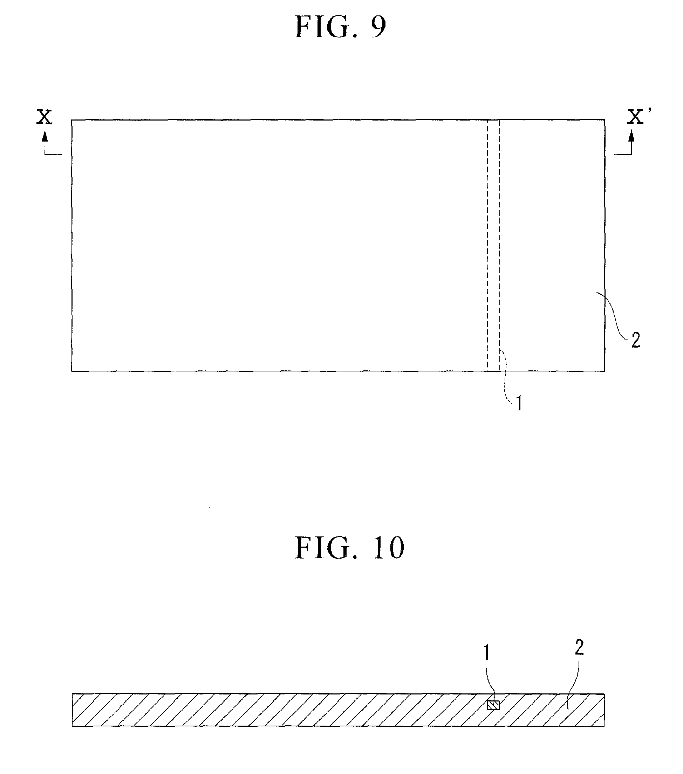

FIGS. 9 and 10 are schematic diagrams showing a first embodiment of a sheet with at least one built-in IC chip according to the present invention. FIG. 9 shows a plan view of the sheet with at least one built-in IC chip of the first embodiment and FIG. 10 shows a cross-sectional view of the sheet with at least one built-in IC chip cut along a line X-X' shown in FIG. 9.

As shown in FIGS. 9 and 10, the sheet with at least one built-in IC chip of this embodiment includes the tape with at least one built-in IC chip 1 of the present invention and a sheet-like material 2, and the tape with at least one built-in IC chip 1 is inserted into the sheet-like material 2.

Materials for forming the sheet-like material 2 are not particularly limited, and it is possible to use paper, a plastic film, and so forth. Among these, it is preferable to use paper since the tape with at least one built-in IC chip 1 can be inserted during a paper making process.

Examples of methods for producing the sheet with at least one built-in IC chip according to the present invention include a single-layer paper making method and a multi-layer paper making method, by which the tape with at least one built-in IC chip 1 is inserted during a machine process, as well as one in which plural base material sheets are attached together.

Examples of the single-layer paper making method include one in which the tape with at least one built-in IC chip 1 is supplied together with a paper raw material supplied to a paper machine wire from a slicer of a long-net paper machine, so that the tape with at least one built-in IC chip 1 is embedded in the paper layers formed on the paper machine wire (which is disclosed in Japanese Unexamined Patent Application, First Publication No. S51-13039), and a method in which a device for inserting the tape with at least one built-in IC chip 1 into a paper raw material supplied from a flowbox of a long-net paper machine is installed and the tape with at least one built-in IC chip 1 is inserted while maintaining the tape with at least one built-in IC chip 1 without contacting with the paper raw material by an air-flow (which is disclosed in Japanese Unexamined Patent Application, First Publication No. Hei 2-169790).

Examples of the multi-layer paper making method include one in which the tape with at least one built-in IC chip 1 is inserted between the paper layers so as to be incorporated therein just before each paper layer is superimposed to form a combination paper having at least two layers using a multi-tank net paper machine. In this case, it is preferable that the combination paper have at least three layers containing a pair of outermost paper layers and an inner paper layer.

In the multi-layer paper making method, it is preferable that an entire part or a part of an inserted portion of a layer into which the tape with at least one built-in IC chip 1 is inserted is formed without attaching a sheet raw material to the portion. More specifically, it is preferable that the sheet raw material not be attached to an inserted portion of the layer which corresponds to a position where the tape with at least one built-in IC chip is to be inserted, the width thereof corresponding to the width of the tape with at least one built-in IC chip.

In practice, however, the width of the portion where no sheet raw material is attached is not necessarily the same as that of the tape with at least one built-in IC chip, and may be slightly wider or narrower than the width of the tape with at least one built-in IC chip as long as it does not cause roughness of the surface of the sheet. It is preferable that the width of the portion where no sheet raw material is attached be wider than that of the tape with at least one built-in IC chip so that the tape does not protrude from the portion even if the tape is inserted in a zigzag.

Furthermore, it is not necessary that papermaking be conducted without attaching the sheet raw material continuously, and, for example, the sheet raw material may be attached with an interval of a few millimeters so that the thickness of the portion where the IC chip is to be embedded becomes thin.

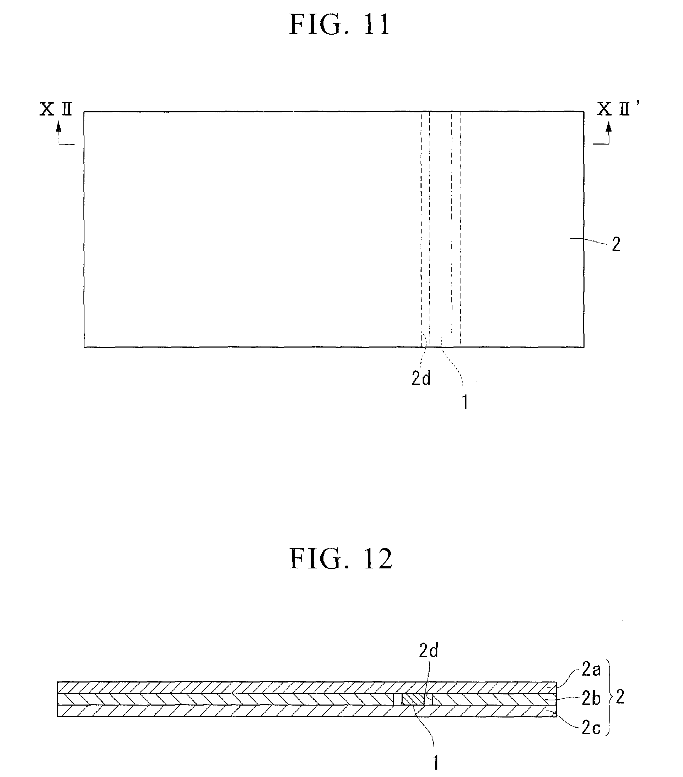

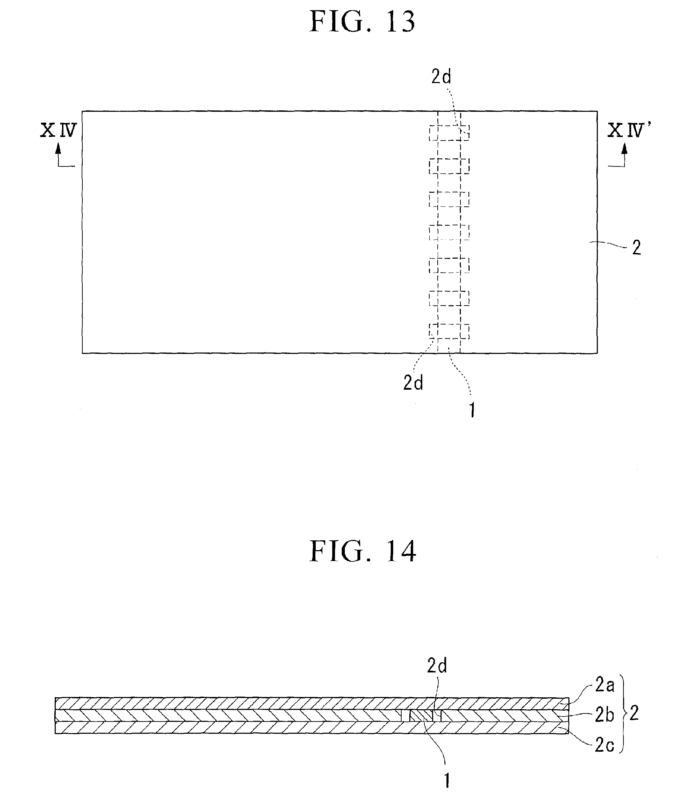

FIGS. 11 and 12 are schematic diagrams showing a modification of the first embodiment, FIG. 11 shows a plan view, and FIG. 12 shows a cross-sectional view of the sheet with at least one built-in IC chip cut along a line XII-XII' shown in FIG. 11. Also, FIGS. 13 and 14 are schematic diagrams showing another modification of the first embodiment, FIG. 13 shows a plan view, and FIG. 14 shows a cross-sectional view of the sheet with at least one built-in IC chip cut along a line XIV- XIV' shown in FIG. 13.

The sheets with at least one built-in IC chip of these modifications have a three-layered structure in which an inner layer 2b is formed between an upper layer 2a and a lower layer 2c, which correspond to outermost layers formed by the sheet-like material 2, and the tape with at least one built-in IC chip 1 is inserted into the inner layer 2b. In the inner layer 2b, a watermark portion 2d is formed without attaching the sheet raw material to the portion into which the tape with at least one built-in IC chip 1 is to be inserted. The width of the watermark portion 2d is somewhat wider than that of the tape with at least one built-in IC chip 1.

In the modification shown in FIGS. 11 and 12, the watermark portion 2d is continuously formed over all of the portion into which the tape with at least one built-in IC chip 1 is to be inserted. In contrast, in the modification shown in FIGS. 13 and 14, the watermark portions 2d are formed with an interval in a part of the portion into which the tape with at least one built-in IC chip 1 is to be inserted (which corresponds to a position where the IC chip is to be embedded).

When the single-layer or multi-layer paper making method is employed, there is a possibility in which the tape with at least one built-in IC chip 1 is drawn off from the paper layers by being pulled off, if the tape with at least one built-in IC chip 1 is not strongly adhered to the paper layers. In order to solve this problem, it is preferable that a water-soluble resin be used in a size press solution in a paper making process, or a thermoplastic resin or a water-soluble resin be applied to the tape with at least one built-in IC chip 1 in advance so as to increase the bonding strength between the paper layer and the tape with at least one built-in IC chip 1. In addition, the bonding strength between the paper layer and the tape with at least one built-in IC chip 1 may be increased by using a film and paper as the base material for the tape with at least one built-in IC chip 1.

Next, the method for inserting the tape with at least one built-in IC chip 1 between paper layers by attaching plural base material sheets will be explained. In this case, materials used for the base material sheet are not particularly limited, and a plastic film or the like may be used as well as paper.

Examples of the adhesive used for the attachment include a water-soluble adhesive, a heat-melting adhesive made of a thermoplastic polymer, a heat-curing adhesive, and so forth. Among them, a curing-type resin is preferable since a bonding formed by the adhesive is rarely broken after once being bonded.

From the viewpoints of the adhesive strength and the ease of handling, an ethylenic resin, a propylene resin, a styrene resin, a vinyl chloride resin, a vinylidene chloride resin, an ethylene / vinyl acetate copolymer resin, a butyral resin, a polyester resin, a polyamide resin, an acryl resin, a nitrile resin, a butadiene resin, a halogenated rubber, a urethane resin, a cellulose resin, gelatin, a phenol resin, a urea-formaldehyde resin, a melamine-formaldehyde resin, an epoxy resin, an unsaturated polyester resin, a silicone resin, an alkyd resin, an allyl resin, a furan resin, a copolymer of monomers which form the above-mentioned resins and so forth may be suitably used.

Among them, a polyester resin, low-density polyethylene, atactic polypropylene, ethylene-vinyl acetate copolymer, ethylene-acrylic acid copolymer, ethylene-ethylacrylate copolymer, vinyl acetate-crotonic acid copolymer, vinyl acetate-phthalic anhydride copolymer, styrene-isoprene-styrene block copolymer, styrene-butadiene-styrene block copolymer, styrene-ethylene-butylene-styrene block copolymer, nylon-12, terephthalic acid-1,3-butadiol copolymer may be suitably used. The heat melting adhesive composed by such a thermoplastic polymer may be used singularly or in a mixture of two or more kinds thereof. Also, a curing agent may be used together.

Examples of adhering methods include: one in which the tape with at least one built-in IC chip 1 is placed on a surface of one of the base material sheets, an adhesive is applied on a surface of another base material sheet, and these base material sheets are adhered; one in which an adhesive layer is formed on a surface of a base material sheet in advance, and the other base material sheet is superimposed thereon in a state in which the tape with at least one built-in IC chip 1 is disposed; and one in which the tape with at least one built-in IC chip 1 is disposed on a surface of one of the base material sheets, another base material sheet is disposed thereon so that an adhesive in a film state or in a powdery state is placed between the two base material sheets, and the adhesive is heated so as to adhere the base material sheets. From the viewpoints of stability in adhesion and operational efficiency, the method of applying the adhesive before the base material sheets are adhered is most preferable.

Also, a vacuum method, a low-temperature laminating method using a thermal primer treatment, or so forth may be adopted when the adhesive in a film state is employed, and an electrostatic coating method, a meshroll spraying method, a thermal spraying method, a spraying method, a screen printing method, or so forth may be adopted when a powdery binding agent is employed.

### (Second embodiment of the sheet with at least one built-in IC chip)

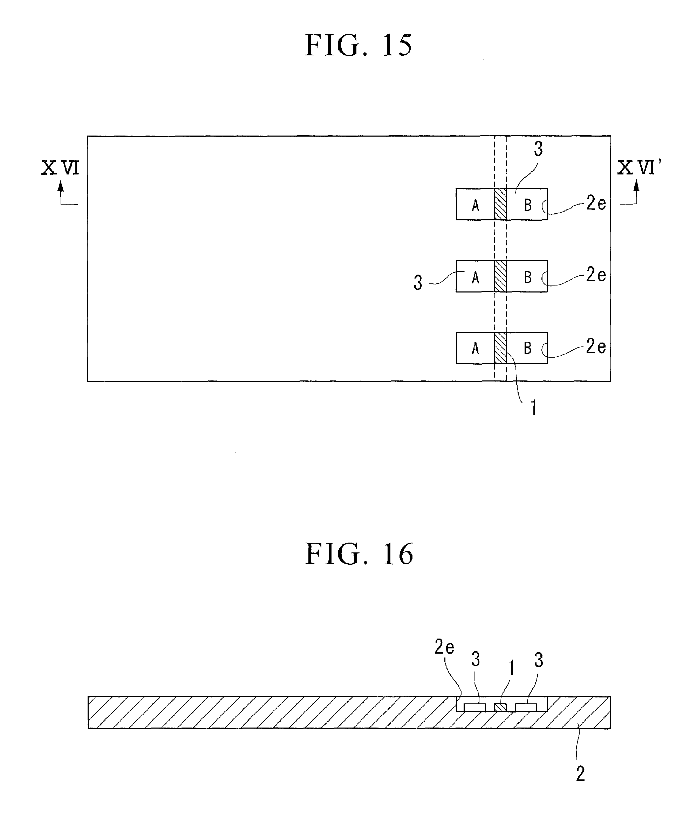

FIGS. 15 and 16 are schematic diagrams showing a second embodiment of a sheet with at least one built-in IC chip according to the present invention. FIG. 15 shows a plan view of the sheet with at least one built-in IC chip of the second embodiment and FIG. 16 shows a cross-sectional view of the sheet with at least one built-in IC chip cut along a line XVI-XVI' shown in FIG. 16.

As shown in FIGS. 15 and 16, the sheet with at least one built-in IC chip of this embodiment includes the tape with at least one built-in IC chip 1 according to the present invention and a sheet-like material 2, and the tape with at least one built-in IC chip 1 is inserted into the sheet-like material 2. Note that a part of the tape with at least one built-in IC chip 1 is in an exposed state in space portions 2e provided in the sheet-like material 2. In this embodiment, watermarks 3 are further provided with the space portions 2e.

Examples of the methods for producing the sheet with at least one built-in IC chip of this embodiment include: one in which a belt mechanism including a guide having a protruding portion and a recessed portion, the tip of the protruding portion thereof being provided with a groove for accommodating the tape with at least one built-in IC chip 1, is embedded in a suspension of paper raw material on a paper machine net wire (which is disclosed in Japanese Examined Patent Application, Second Publication, No. H5-085680); one in which a nozzle for providing compressed air is disposed with a revolving drum on a long-net machine wire, and a slurry on the tape with at least one built-in IC chip 1 which has been inserted into wet paper in advance is intermittently blown using compressed air so as to expose the tape with at least one built-in IC chip 1 (which is disclosed in Japanese Unexamined Patent Application, First Publication, No. H6-272200); and one in which a net which has been processed so as to be rough is used as an upper net of a net paper machine, and the tape with at least one built-in IC chip 1 is incorporated into a space portion by inserting the tape with at least one built-in IC chip 1 therein while being in contact with the rough surface of the net (which is disclosed in U.S. Patent No. 4.462,866).

Also, another method may be adopted by which when combination paper including at least two layers, namely, an outermost paper layer and an innermost paper layer, is formed using a multi-tank net paper machine, space portions are intermittently formed in the outermost paper layer (or an inner paper layer), and the tape with at least one built-in IC chip 1 is inserted between paper layers so that the tape with at least one built-in IC chip 1 is exposed just before an inner paper layer (or the outermost paper layer) free from space portions is superimposed thereon.

### (Third and fourth embodiments of the sheet with at least one built-in IC chip)

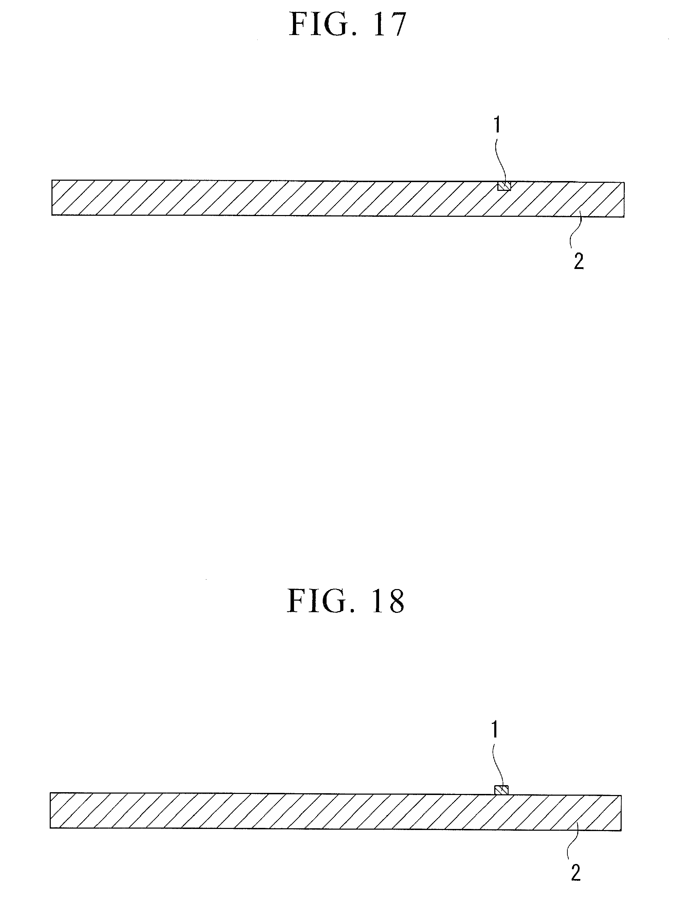

FIGS. 17 and 18 are schematic diagrams each showing a third embodiment or a fourth embodiment of the sheet with at least one built-in IC chip according to the present invention.

As shown in FIGS. 17 and 18, each of the sheets with at least one built-in IC chip of these embodiments includes the tape with at least one built-in IC chip 1 according to the present invention and the sheet-like material 2.

In the third embodiment of the present invention shown in FIG. 17, the tape with at least one built-in IC chip 1 is attached to a groove formed on the sheet-like material 2. In the fourth embodiment of the present invention shown in FIG. 18, on the other hand, the tape with at least one built-in IC chip 1 is attached to the surface of the sheet-like material 2.

Since the tape with at least one built-in IC chip 1 is protected from a mechanical external force due to the presence of the groove, the third embodiment may be more preferable than the fourth embodiment. Note that the depth of the groove may be suitably altered according to the thickness, materials, etc., of the IC chip, the tape with at least one built-in IC chip 1, and the sheet-like material 2, and is preferably within the range of 0.5 to 2 times the thickness of the IC chip.

As for the method for producing the sheet with at least one built-in IC chip according to the third embodiment of the present invention, it is effective to reduce the thickness of only paper layers between which the tape with at least one built-in IC chip 1 is inserted and to form a groove for inserting the tape with at least one built-in IC chip 1.

More specifically, it is possible to use known watermarking techniques. Examples of such techniques include a method by which a wire, metal, resin, paper, etc., is soldered or attached using an adhesive to an upper net of a circular net cylinder, a method by which a weave is scaled by applying a paint, resin, etc., onto a net, a method by which a net for papermaking is directly roughened, a method by which a mold is attached to a net using a photosensitive resin, a method by which compressed air is blown, in a wet paper state, to a part so as to form a groove, a method by which a portion is abraded, in a wet paper state, using an abrasion roll so as to form a groove, and so forth.

### EXAMPLES

Hereinafter the present invention will be explained in detail with reference to examples; however, it is apparent that the present invention is not limited to these examples.

### (Example 1)

### Preparation of a tape with at least one built-in IC chip

A polyethylene terephthalate (PET) film having a thickness of 12 µm and paper having a thickness of 40 µm were laminated together with a hot-melt resin (manufactured by TOYOBO CO., LTD., under the trade name of VYLON GA-3410) having a thickness of 30 µm, so as to form a laminated body having a thickness of 82 µm. A tape body of 1000 m in length was produced by cutting to 2.5 mm width.

Then, an IC chip-inseilion opening of 0.6×0.6 mm (length and width) was formed in the paper layer. The IC-chip-insertion opening was formed by radiating laser beams onto the paper layer.

After this, the region surrounding the IC chip-insertion opening of the tape body was heated at 130°C, and a fine IC chip having a side of 0.5 mm and a thickness of approximately 70 µm was inserted through the IC chip-insertion opening until the bottom of the IC chip approximately reached the PET layer, as a result of which the tape with at least one built-in IC chip in which approximately all of the fine IC chip was embedded in the tape body was obtained.

### Preparation example 1 of a sheet with at least one built-in IC chip

A sheet with at least one built-in IC chip was produced by combining two layers at a rate of 50 m/min using a cylinder paper machine provided with two cylinder vats. At this time, the above-mentioned tape with at least one built-in IC chip was inserted between a first layer (paper having a dry weight of 51 g/m²) and a second layer (paper having a dry weight of 51 g/m²), and the sheet with at least one built-in IC chip was obtained.

### Preparation example 2 of a sheet with at least one built-in IC chip

Using a three layer cylinder paper machine which was operated at a combining rate of 50 m/min, a tape with at least one built-in IC chip (having a maximum thickness of 70 µm) was inserted between layers to form a sheet with at least one built-in IC chip. At this time, a first layer (dry weight of 25 g/m²) and a second layer (dry weight of 55 g/m²) were combined using a standard method, and the tape with at least one built-in IC chip was inserted when a third layer (dry weight of 25 g/m²) was combined.

In order to form a portion free from adhered raw material with a 10 mm width at a portion into which the tape was to be inserted, a continuous band-like mark having a 10 mm width was attached around the second layer cylinder. By this, a sheet with at least one built-in IC chip in which no sheet raw material was attached and no tape-protrusion was generated in a 10 mm width was obtained.

### Preparation example 3 of a sheet with at least one built-in IC chip

Using a three layer cylinder paper machine which was operated at a combining rate of 50 m/min, a tape with at least one built-in IC chip (having a maximum thickness of 70 µm) was inserted between layers to form a sheet with at least one built-in IC chip. At this time, a first layer (dry weight of 25 g/m²) and a second layer (dry weight of 55 g/m²) were combined using a standard method, and the tape with at least one built-in IC chip was inserted when a third layer (dry weight of 25 g/m²) was combined.

In order to form a plurality of portions of 10 mm width free from adhered raw material at a portion into which the tape was to be inserted, marks each having a 10 mm width were attached around the second layer cylinder at 2 mm intervals. By this, a sheet with at least one built-in IC chip in which no sheet raw material was attached and no tape-protrusion was generated in a 10 mm width at 2 mm intervals was obtained.

### Preparation example 4 of a sheet with at least one built-in IC chip

Using a cylinder paper machine provided with a four layer cylinder vat which was operated at a combining rate of 50 m/min, a tape with at least one built-in IC chip was inserted between layers to form a sheet with at least one built-in IC chip. At this time, the first layer and the second layer (each having a dry weight of 51 g/m²) were combined using a standard method, and the same tape with at least one built-in IC chip as that of Example 1 was inserted when the third layer (dry weight of 51 g/m²) was combined.

In order to form a portion of 10 mm width free from adhered raw material at the portion into which the tape was to be inserted, a continuous band-like mark having a 10 mm width was attached around the third layer cylinder. For the fourth layer cylinder, marks were attached to the surface of the cylinder so that watermark windows of 10 mm square were formed with a predetermined interval at the portion where the tape with at least one built-in IC chip was inserted. By this, a sheet with at least one built-in IC chip was obtained in which no sheet raw material was attached in a 10 mm width, the tape with at least one built-in IC chip inserted into the paper layers was visible at a predetermined interval through the surface thereof, and no tape-protrusion was generated.

### (Example 2)

Paper with at least one built-in IC chip was produced by combining three layers at a rate of 50 m/min using a cylinder paper machine provided with three cylinder vats. At this time, a first layer and a second layer (each having a dry weight of 51 g/m²) were combined using a standard method, and the same tape with at least one built-in IC chip as in Example 1 was inserted when a third layer (paper having a dry weight of 51 g/m²) was combined.

Marks were put on the surface of the cylinder for the third layer and the layer was then combined so that watermark windows of 10 mm square were formed with a predetermined interval at the portion where the tape with at least one built-in IC chip was inserted. By this, a sheet in which the tape with at least one built-in IC chip inserted in the paper layers was visible through the surface was obtained.

### (Example 3)

An ethylene-vinyl acetate copolymer binder (manufactured by Saiden Chemical Industry, Co., Ltd., under the trade name of "Saibinol DBA107") was applied onto paper with a base weight of 150 g/m² using a roll coater so that a coating amount became 10 g/m². When another paper with a base weight of 150 g/m² was attached to the binding surface, the tape with at least one built-in IC chip used in Example 1 was inserted between the papers, and a sheet with at least one built-in IC chip was obtained.

### (Example 4)

### Preparation of tape with at least one built-in IC chip

Sheets of a polyethylene terephthalate (PET) film each having a thickness of 25 µm were laminated together via a polyester-based hot-melt resin (manufactured by TOAGOSEI CO., LTD., under the trade name ofARON MELT PES-111EE) with a thickness of 30 µm, so as to form a laminated body having a thickness of 80 µm. The laminated body was slit to 2.5 mm in width and a tape body with a length of 1500 m was obtained.

Then, an IC chip-insertion opening of 0.6×0.6 mm (length and width) was formed in one of the PET films. The IC chip-insertion opening was formed by radiating laser beams onto the other PET film.

After this, a fine IC chip having a side of 0.5 mm and a thickness of approximately 70 µm was inserted through the IC chip-insertion opening until the bottom of the IC chip approximately reached the opposite PET layer while heating the portion over the IC chip-insertion opening of the tape body at 180°C, as a result of which the tape with at least one built-in IC chip in which most of the fine IC chip was embedded in the tape body was obtained.

### Preparation of a sheet with at least one built-in IC chip

Paper with at least one built-in IC chip was produced by combining three layers at a rate of 50 m/min using a cylinder paper machine provided with three cylinder vats. At this time, the first layer and the second layer (each having a dry weight of 51 g/m²) were combined using a standard method, and the tape with at least one built-in IC chip was inserted when a third layer (paper having a dry weight of 51 g/m²) was combined.

For the third layer cylinder, marks were attached to the surface of the cylinder so that watermark windows of 7 mm square were formed with a predetermined interval at a portion where the tape with at least one built-in IC chip was inserted. In this manner, a sheet with at least one built-in IC chip in which the tape with at least one built-in IC chip inserted into the paper layers was visible at a predetermined interval through the surface thereof was obtained.

### Industrial Applicability

The tape with at least one built-in IC chip and the sheet with at least one built-in IC chip according to the present invention can be effectively used for paper currency, merchandise coupons, bank checks, stock certificates, passports, IDs, physical distribution tags, and so forth.

## Claims

1. A tape with at least one built-in IC chip used for a sheet with at least one built-in IC chip, **characterized by** comprising: at least one IC chip; and a tape body having at least one recessed portion, wherein
a part or all of the IC chip is embedded in the recessed portion, and
the tape body comprises: a first base material; an adhesive layer laminated on the first base material and formed of an adhesive; and a second base material laminated on the adhesive layer;
the second base material being removed from the recessed portion and the periphery thereof, and the adhesive of the adhesive layer being pushed to the periphery of the recessed portion, and the pushed adhesive filling in a gap between the periphery of the IC chip and the second base material.

2. The tape with at least one built-in IC chip according to Claim 1, wherein all of the IC chip is embedded in the tape body.

3. The tape with at least one built-in IC chip according to Claim 1 or 2, wherein the adhesive is a hot-melt resin.

4. A method for producing a tape with at least one built-in IC chip used for a sheet with at least one built-in IC chip, **characterized by** comprising:
a step of forming a tape body by laminating a first base material and a second base material via an adhesive layer formed of an adhesive;
a step of forming at least one IC chip-insertion opening by removing a part of the second base material; and
a step of inserting at least one IC chip into the adhesive layer through the IC chip-insertion opening.

5. The method for producing a tape with at least one built-in IC chip according to Claim 4, wherein the adhesive is a hot-melt resin and the step of inserting is carried out under heated conditions.

6. The method for producing a tape with at least one built-in IC chip according to Claim 4 or 5, wherein the step of forming the insertion opening is carried out by laser irradiation.

7. A sheet with at least one built-in IC chip, **characterized in that** the tape with at least one built-in IC chip of any one of Claims 1 to 3 is inserted inside a sheet-like material.

8. The sheet with at least one built-in IC chip according to Claim 7, wherein the sheet-like material is a multilayer paper.

9. The sheet with at least one built-in IC chip according to Claim 8, wherein an entire part or a part of an inserted portion of a layer into which the tape with at least one built-in IC chip is inserted is formed without attaching a sheet raw material.

10. The sheet with at least one built-in IC chip according to Claim 7, wherein a part of the tape with at least one built-in IC chip is in an exposed state.

11. The sheet with at least one built-in IC chip, **characterized in that** the tape with at least one built-in IC chip of any one of Claims 1 to 3 is attached to a sheet-like material.
